# EUROPEAN PATENT APPLICATION

(11) **EP 2 514 320 A1**
(43) Date of publication of application: **24.10.2012**
(21) Application number: 10837639.3
(22) Date of filing: 15.12.2010
(51) Int. Cl.: A23L 1/221, A23L 1/313, A23L 2/00, A61K 8/97, A61K 8/98, A61Q 13/00, C11B 9/02

(54) **METHOD FOR PRODUCING FLAVORING AGENT, AND FLAVORING AGENT**

(30) Priority: 16.12.2009 JP 2009284761; 30.08.2010 JP 2010192577
(71) Applicant: Kaneka Corporation, Osaka-shi, Osaka 530-8288 (JP)
(72) Inventor: KEGASA, Hideaki, Takasago-shi Hyogo 676-8688 (JP); TAKENAKA, Hidenori, Tokyo 107-6025 (JP); TAKARAGAWA, Atsushi, Osaka-shi Osaka 530-8288 (JP); ABE, Masayuki, Takasago-shi Hyogo 676-8688 (JP)
(74) Representative: HOFFMANN EITLE
(86) International application number: PCT/JP2010/072575
(87) International publication number: WO 2011/074613

(57) **Abstract**

The problem to be solved of the present invention is to provide a method which can efficiently and economically produce a flavoring agent and can give the original flavor of a raw material to a food and drink. The objective of the present invention is also to provide a flavoring agent. The method for producing a flavoring agent according to the present invention is characterized in comprising the steps of mixing a flavor material with a solvent and extracting a flavor component contained in the fragrant material under pressure; wherein a solubility parameter of the solvent is not less than 8.0 and not more than 25.0.

## Description

### TECHNICAL FIELD

The present invention relates to a flavoring agent and a method for producing a flavoring agent.

### BACKGROUND OF THE INVENTION

A flavoring agent is used for giving a good flavor to a food and drink and the like, such as a sweet, a dessert, a drink, a processed food such as a soup. With a flavoring agent, the taste of a food and drink can be improved, and a food and drink becomes tempting. Recently, natural taste is more favored, and it becomes needed that the flavor of a food and drink is closer to the original flavor of the ingredient thereof.

In order to make a flavor of a food and drink closer to that of the ingredient thereof, a fragrance material and a taste component are added and a fragrance and/or a taste is adjusted. However, a currently-used fragrance material and a taste component are mainly synthetic compounds, and a naturally-derived fragrance material and taste component are desired (Patent Documents 1 and 2).

The term "flavor" means collective senses brought to the brain through neurotransmission when people take a food, and mainly is composed of taste sensation and olfactory sensation. A flavor is also referred to savoriness and smack. For example, as a method to make a flavor of a food and drink closer to that of the ingredients, it is known to collect a recovered scent of coffee by steam-distillation (Patent Document 3).

As a method for obtaining a flavor from a natural material, an extraction method such as supercritical extraction is known (Patent Document 4).

### PRIOR ART

### PATENT DOCUMENT

Patent Document 1: JP-A-56-150077
Patent Document 2: JP-A-60-56930
Patent Document 3: JP-A-2-203750
Patent Document 4: JP-A-62-148598

### SUMMARY OF THE INVENTION

### PROBLEM TO BE SOLVED BY THE INVENTION

However, it is difficult to perfectly adjust the fragrance and the taste to natural with the fragrance material and the taste component according to the conventional method described in Patent Documents 1 and 2.

In addition, a method described in Patent Document 3 requires a troublesome procedure. For example, a fractionation procedure should be carried out after steam distillation. Furthermore, a fragrance component which is highly-volatile and unstable cannot be sufficiently recovered by the method of Patent Document 3.

A method described in Patent Document 4 is not suitable for commercial production, since special equipment is needed.

As described above, conventional methods has a problem that a flavoring component which give entirely satisfactory flavor to a food and drink cannot be obtained. In addition, conventional methods are not economically sufficient for commercial purposes.

Furthermore, there is a possibility in the future that natural flavor materials are exhausted; therefore, a method which can extract a favor component from a small amount of material with high efficiency is desired.

The problem to be solved of the present invention is to provide a method which can efficiently and economically produce a flavoring agent and can give the original flavor of a raw material to a food and drink. The objective of the present invention is also to provide a flavoring agent.

### MEANS TO SOLVE THE PROBLEM

The present inventors researched very hard to solve the above-described problem. As a result, it was found that a flavor component which is contained in a flavor material can be extracted using a solvent having a specific value of solubility parameter (SP) under pressure. Also, the present inventors found that such an extracted flavor component can give the flavor intrinsically-contained in a flavor material to a food and drink and has high titer value, to complete the present invention.

The present invention is relates to a method for producing a flavoring agent, comprising the steps of mixing a flavor material with a solvent and extracting a flavor component contained in the flavor material under pressure; wherein a solubility parameter of the solvent is not less than 8.0 and not more than 25.0.

The other present invention relates to a flavoring agent, obtained by the above-described production method.

The other present invention relates to a food and drink, comprising the above-described flavoring agent.

The other present invention relates to a flavor product, comprising the above-described flavoring agent.

### BRIEF DESCRIPTION OF THE DRAWING

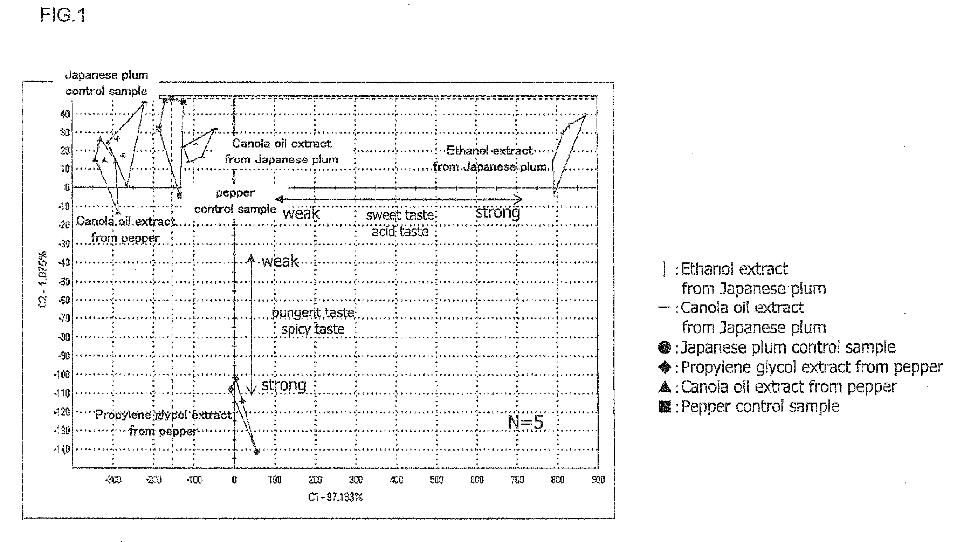

Figure 1 is a graph showing the result measured by an electronic taste sensing system when the flavoring agents obtained by the present invention method were compared with the flavoring agents obtained using oil.

### DETAILED DESCRIPTION OF THE INVENTION

Hereinafter, the present invention is described in more detail.

The flavoring agent of the present invention is characterized by being produced a method comprising the step of extracting a flavor component contained in a flavor material under pressure using a solvent having a SP value of not less than 8.0 and not more than 25.0.

According to the production method of the present invention, a flavoring agent having a high titer value can be obtained. By such a flavoring agent, a flavor intrinsically possessed by a flavoring material can be given to a food or drink.

The flavoring agent of the present invention is obtained by extracting a flavor component originally included by a flavor material, and can be added to and/or mixed with a food or a drink to impart a flavor intrinsically possessed by a flavoring material thereto. The flavoring agent of the present invention is basically a liquid phase which is obtained by extracting a flavor component from a flavor material using a solvent having a specific SP value and removing solid contents. The flavoring agent of the present invention may be also a solid-liquid dispersion obtained before the above-described solid-liquid separation. In addition, the flavoring agent may be a concentrate obtained from the products without impairing the flavor.

In the present invention, the term "flavor" is a combination of a scent and a taste, and a balanced scent is included in the term "scent".

A flavor material used in the present invention is not particularly limited, and is exemplified by a plant flavor material such as a seasoning spice, a flavor vegetable, a nut, a fruit, a mushroom and a seaweed. The plant flavor material may be directly used, and a processed flavor material may be used. Such a processed flavor material is exemplified by an essential oil, an extract, a hydrolysis product, a heated product, a roast product, a smoked product, a dried product, a frozen product, a pressure-treated product, a precooked product, which are obtained from the flavor material itself, and a combination thereof. In addition, an animal flavor material may be used. Such an animal flavor material is exemplified by a meat product such as a meat, a seafood, a dairy, and processed products thereof such as an extract, a hydrolysis product, a heated product, a roast product, a smoked product, a dried product, a frozen product, a pressure-treated product, a precooked product and a combination thereof. One of the flavor materials may be used alone, and two or more flavor materials may be used in combination as necessary.

A seasoning spice is exemplified by a spice and a herb. A spice is exemplified by a seed spice such as pepper, anise, fennel, cardamom, caraway seed, cumin, poppy seed, sesame seed, coriander, Japanese basil, celery, dill and mustard; a rhizome spice such as Japanese horseradish, turmeric, licorice, ginger, turmeric root and garlic; a fruit spice such as allspice, cardamom, Japanese pepper, star anise, chili pepper, vanilla, mace and rose hip; a flower bud spice such as clove, saffron, chamomile and hop; a bark spice such as cassia and cinnamon; and a pericarp spice derived from orange, mandarin orange, Japanese citron, lemon and grapefruit; and the like. A herb is exemplified by a leave and stem herb such as oregano, mint, sage, thyme, tarragon, rosemary, coriander, celery, basil, parsley, lemongrass, lemon myrtle, lindens, laurels, Japanese mint, Zingiber mioga and jasmine; and the like. One of the seasoning spices may be used alone, and two or more seasoning spices may be used in combination.

A flavor vegetable is exemplified by a leafy flavor vegetable such as melon, Corchorus olitorius, lettuce, onion, crown daisie, Brassica rapa var. perviridis, Oenanthe javanica and Allium tuberosum; a flavor fruit vegetable such as tomato and broccoli; and the like. One of the flavor vegetables may be used alone, and two or more flavor vegetables may be used in combination.

A nut is exemplified by almond, cashew nut, cacao, coffee, hazelnut, coconut, corn, soybean, red bean, pistachio, peanut, pine nut and the like. One of the nuts may be used alone, and two or more nuts may be used in combination.

A fruit is exemplified by apples, mango, European pear 'La France', apricot, strawberry, fig, plum, orange, grapefruit, lemon, Japanese citron, Chaenomeles sinensis, kiwi fruit, cherry, Lycium chinense, gooseberry, Gardenia florida, oleaster, cranberry, pomegranate, Nashi pear, blackberry, blueberry, lyche, lime, Siraitia grosvenorii, raspberry, melon, peach, Myrica rubra, Japanese plum, pineapple, Eriobotrya japonica, grape and the like. One of the fruits may be used alone, and two or more fruits may be used in combination.

A mushroom is exemplified by shiitake mushroom, matsutake mushroom, shimeji mushroom, Auricularia auricula-judae, enoki mushroom, truffle, Pleurotus cornucopiae var. citrinopileatus, Pholiota nameko, Mycoleptodonoides aitchisonii, Grifola frondosa, button mushroom, oyster mushroom, Agrocybe aegerila, porcino mushroom and the like. One of the mushrooms may be used alone, and two or more mushrooms may be used in combination.

A seaweed is exemplified by genus Undaria, laminaria, Sargassum fusiforme, Nemacystus decipiens, Porphyra tenera, Porphyra yezoensis and the like. One of the seaweeds may be used alone, and two or more seaweeds may be used in combination.

Ameat is exemplified by beef, pork, chicken, horseflesh, mutton and lamb, and the like. Raw meat may be directly used, or a processed meat may be used. One of the meats may be used alone, and two or more meats may be used in combination.

A seafood is exemplified by a saltwater seafood and a freshwater seafood such as horse mackerel, yellowfin tuna, mackerel, squid, octopus, Plecoglossus altivelis altivelis, carp and salmon; a crustacean such as shrimp, crab and euphausiid; a shellfish such as Ruditapes philippinarum, Meretrix lusoria, corbicula, oyster, scallops and abalones. Raw seafood may be directly used, or processed seafood may be used. One of the seafoods may be used alone, and two or more seafoods may be used in combination.

A dairy is exemplified by cow milk, sheep milk, cheese, butter, butter oil, buttermilk, fermented milk, whey, cream and the like. One of the dairies may be used alone, and two or more dairies may be used in combination.

In addition to the above-described flavor material, the flavor material of the present invention is exemplified by a tea such as oolong tea, black tea, green tea, Mate and barley tea; a beverage such as coke and liqueur; a brewed product such as soy sauce, soy sauce cake (residue of soy sauce), fermented soybean paste, rice wine, rice wine cake (residue of rice wine), rice malt, vinegar and fermented seasoning solution; a sugar such as honey; and the like. One of the materials may be used alone, and two or more materials may be used in combination. The material can also be used in combination with the animal and vegetable flavor materials described above and the like.

In the present invention, any of a raw flavor material, a frozen flavor material and a dried flavor material can be used. A raw flavor material is preferred from the viewpoint that a flavoring agent having a flavor of a fresh flavoring material can be obtained and from the economic standpoint. However, a frozen flavor material or a dried flavor material can also be used from the viewpoints of storage stability of the flavor material, enhanced extraction efficiency due to improved penetration of the extraction solvent resulting from tissue destruction, and the like.

The flavor material can be used in any state. For example, the flavor material may be used as it is, in a pulverized state, in a powdered state, in a paste state and the like. From the viewpoints of enhanced extraction efficiency, ease of handling and the like, a pulverized state in a size of approximately not less than 0.5 mm and not more than 50 mm or a powdered state of approximately not larger than 0.5 mm is preferred. The method for pulverizing, powdering or producing paste is not particularly limited, and a known means such as a food processor, a cutter mixer, a mill, a grinder and a homogenizer can be used.

In the present invention, as described above, the flavor material as a raw material is preferably in a pulverized state, a paste state or a powdered state. The flavor material may be preliminary made into a pulverized, paste or powdered state before extraction, or may be made into a pulverized, paste or powdered state after a solvent is added. From the viewpoint that the flavor component possessed by a flavor material does not scatter, it is preferred to pulverize or powder a flavor material after a solvent is added, it is more preferred to carry out such a procedure under pressure, and it is further preferred to transfer the mixture to the subsequent pressurized extraction step in a tightly-sealed condition under pressure.

In the present invention, extraction is carried out under pressure. From the viewpoint of extraction efficiency of the flavor intrinsically possessed by a flavor material and from the economic standpoint, extraction is preferably carried out at a gauge pressure in pressurized extraction of not lower than 0.01 MPa and not higher than 50 MPa. The lower limit of the gauge pressure is more preferably 0.03 MPa, even more preferably 0.05 MPa, and particularly preferably 0.1 MPa. The upper limit of the gauge pressure is preferably 30 MPa, more preferably 15 MPa, even more preferably 10 MPa, particularly preferably 8 MPa, and most preferably 5 MPa.

In the present invention, a pressurizing method is not particularly limited as long as it allows pressurization, and a known method can be performed. A known method is exemplified by pressurization using water and pressurization with nitrogen gas, both of which are utilized in a cooking and sterilizing device that is operated at high temperatures and high pressures and is generally used for food.

In order to inhibit an unpreferable flavor to be generated at the time of extraction, it is preferred to substitute the headspace during pressurized extraction and the gas in the extraction solution with an inert gas such as nitrogen gas and CO₂ gas.

From the viewpoint of extraction efficiency, stirring is preferably performed at the time of pressurized extraction.

The gauge pressure according to the present specification refers to a relative pressure assuming atmospheric pressure is zero.

The extraction solvent used in the method of the present invention is selected from solvents having a solubility parameter: SP value of not less than 8.0 and not more than 25.0. The solubility parameter, which is also called a dissolution parameter, a solubilizing parameter or a Hildebrand parameter, is an important value in evaluation of solubility of a substance in a solvent. In general, the smaller the difference between the solubility parameters of a solute and an extraction solvent is, the higher the extraction efficiency is. The solubility parameter can be calculated from the equation: (cal/cm³)^{1/2}, which represents the square root of the vaporization heat required for a liquid with a volume of 1 mol to be evaporated.

The SP value is preferably not less than 9.0 and not more than 23.4 from the viewpoint of efficient extraction of a flavor (scent and taste) possessed by a flavoring material. As a solvent having an SP value of not less than 9.0 and not more than 23.4, water (23.4), glycerin (16.5), propylene glycol (14.8), methanol (14.5 to 14.8), ethanol (12.7), 1-propanol (12.1), 2-propanol (11.2), acetone (10.0), triacetin (9.0), ethyl acetate (9.0) and the like can be exemplified. Among the solvents, from the viewpoint of ease of extraction and handling of a flavor component, water; an alcohol solvent such as methanol, ethanol, 1-propanol, 2-propanol, glycerin and propylene glycol; a ketone solvent such as acetone; and an ester solvent such as triacetin are preferred. In addition, from the viewpoint of safety, water, ethanol, propanol, butanol, propylene glycol and triacetin are more preferable, and ethanol, propylene glycol and triacetin are even more preferable. In the present invention method, two or more solvents may be used in combination. A mixed solvent of a water-miscible solvent and water is also preferable. For example, a mixed solvent containing the alcohol solvent or the ketone solvent in addition to water is preferable; and a mixed solvent containing methanol, ethanol, 1-propanol, 2-propanol, glycerin, propylene glycol or acetone in addition to water is more preferred; and a mixed solvent containing ethanol or propylene glycol in addition to water is even more preferred. The mixing ratio of such a mixed solvent is not particularly limited and can be adjusted as needed. For example, in the case of using a mixed solvent of water and ethanol, the concentration of the aqueous ethanol solution may be adjusted as needed depending on the water content of a raw material and the like, and is preferably not less than 25% by volume and not more than 98% by volume. The concentration is more preferably not less than 50% by volume, even more preferably not less than 70% by volume, and is more preferably not more than 97% by volume. From the viewpoint of the stability of a flavor component, citric acid, ascorbic acid and the like may be additionally dissolved therein if necessary to the extent that does not negatively affect the flavor of a flavoring agent.

In the present invention, although the above-described solvent is generally used, a solvent that is miscible with the solvents may be concurrently used as needed. As the solvent used in the present invention, however, only the solvent having an SP value of not less than 8.0 and not more than 25.0 is preferably used.

As the solvent that can be concurrently used with the above-described solvent having an SP value of not less than 8.0 and not more than 25.0, a hydrocarbon solvent such as heptane and hexane, an ether solvent such as diethyl ether, and the like can be specifically exemplified.

In the present invention, the amount of an extraction solvent to be used relative to a flavor material is not particularly limited and varies depending on the kind of the extraction solvent and the desired titer of the flavoring agent. In order to obtain a flavoring agent with a high titer, the amount of the extraction solvent relative to 100 parts by weight (dry weight) of a flavor material is preferably not less than 10 parts by weight, more preferably not less than 50 parts by weight, even more preferably not less than 100 parts by weight, and particularly preferably not less than 200 parts by weight. The upper limit of the amount of the extraction solvent is preferably 200000 parts by weight, more preferably 20000 parts by weight, even more preferably 8000 parts by weight, and particularly preferably 4000 parts by weight.
In the present invention, the temperature at the time of pressurized extraction is not particularly limited, and is preferably not less than 0°C and not more than 100°C. The lower limit thereof is more preferably 10°C, further preferably 20°C, and particularly preferably 30°C. The upper limit thereof is more preferably 90°C and even more preferably 80°C. The lower limit of the temperature can be suitably selected as a temperature at which extraction efficiency is not too low. The upper limit of the temperature can be suitably selected as a temperature at which an unpreferable flavor such as a burnt flavor or an unpleasant aftertaste is less prone to be generated.

In the present invention, the duration of extraction at the time of pressurized extraction is not particularly limited, and is preferably not shorter than 30 seconds and not longer than 600 minutes although it depends on the form of a flavor material and extraction temperature. When the duration of extraction is not shorter than 30 seconds, extraction efficiency can be more certainly ensured, and when the duration of extraction is not longer than 600 minutes, an unpreferable flavor such as a burnt flavor or an unpleasant flavor can be more certainly inhibited from being generated or being extracted. The lower limit of the duration of extraction is more preferably 2 minutes, even more preferably 5 minutes, and particularly preferably 10 minutes. The upper limit thereof is more preferably 300 minutes, even more preferably 120 minutes, particularly preferably 60 minutes, and most preferably 30 minutes. The lower limit of the duration can be suitably adjusted as duration at which extraction efficiency is not too low. The upper limit of the duration can be suitably adjusted as duration at which an unpreferable flavor such as a burnt flavor or an unpleasant aftertaste is less prone to be generated.

The temperature and the pressure at the time of extraction, and the duration of extraction are preferably adjusted relative to each other. For example, when the temperature is not lower than 30°C and not higher than 80°C, pressurized extraction at a gauge pressure of not less than 0.03 MPa and not more than 10 MPa for not shorter than 5 minutes and not longer than 30 minutes economically and more certainly yields a flavoring agent which possesses a satisfactory flavor with less energy consumption.

The heating method is not particularly limited, and for example, a known heating method such as steam heating or electrical heating can be utilized.

In the present invention, the flavoring agent can be obtained by performing, after pressurized extraction, solid-liquid separation using a known separation means such as decantation, centrifugation, filtration with filter paper, a filter press and or a screw press, and then recovering a liquid phase.

In order to prevent the scattering of volatile scent component, it is preferred to perform cooling down to around room temperature after pressurized extraction and then proceed to the subsequent solid-liquid separation step. In addition, it is more preferable to continuously carry out both the pressurized extraction step and the solid-liquid separation step in a tightly-sealed condition, and it is even more preferable to continuously carry out a step of mixing and pulverizing a flavor material and an extraction solvent, the extraction step, and the solid-liquid separation step in a tightly-sealed condition.

When each step is carried out in a tightly-sealed condition, it is possible to transfer the mixture to the extraction step under pressure after mixing and pulverizing, and then transfer the mixture to the solid-liquid separation step under pressure after extraction to carry out solid-liquid separation under pressure. It is also possible to carry out a step of filling the mixture into a container in a tightly-sealed condition. Such processes are also included in the present invention. The term "tightly-sealed condition" means a state where there is no direct contact to the atmosphere.
In the present invention method, it is particularly preferred to further carry out filtration under pressure after the extraction step, since the filtration can efficiently remove solid contents to yield a liquid flavoring agent as filtrate. In addition, by applying pressure during the filtration, the efficiency of the filtration become more efficient.

The container for the flavoring agent is preferably a glass container, a plastic container, an aluminum-laminated container, a metal container and the like from the viewpoints of preventing the scattering of a flavor component, storability, transportability and the like. The material of the container is not particularly limited provided that the container allows to be tightly sealed. To the flavoring agent of the present invention, various food additives may be added. Such a food additive is selected from known additives such as a fragrance, a sweetener, a colorant, a thickener, an emulsifier, a preservative, an antioxidant, a stabilizer and an anti-aggregation agent.

The flavoring agent of the present invention is preferably used in a food and drink application, and can also be utilized in various fields such as cosmetics. The food and drink is not particularly limited, and the flavoring agent of the present invention can be used in, for example, a seasoning, an edible oil, a spread, a dairy product, a prepared food, a soup, a canned food, a noodle, a bread, a cereal, a processed meat, a fish paste product (surimi), a Japanese pickle, a Japanese preserved food cooked in soy sauce (tsukudani), a pre-cooked food, a dried farm product, a processed aquatic product, a confection, a dessert, a yogurt, a delicacy, an ice cream, a palatable beverage, a fruit beverage, a soft drink, a milk beverage, an alcoholic beverage and the like. The flavoring agent of the present invention can be added during production or before eaten. The cosmetics, which are a generic term for scented products except for a food and drink and which are exemplified by a perfume product and a cosmetic product, are not particularly limited. The flavoring agent of the present invention can be used in, for example, a cosmetic fluid, a cream, a hairdressing, a perfume, a fragrance, a shampoo, a conditioner, a soap, a toothpaste, a bath salt and the like.

According to the method of the present invention, a flavoring agent that results from extracting, with a high titer, a flavor intrinsically possessed by a flavoring material can be obtained. Using the flavoring agent of the present invention, it is possible to impart the flavor intrinsically possessed by the flavoring material to a food and drink, a cosmetic and the like.

### EXAMPLES

Hereinafter, the present invention is described in more detail with Examples; however, the present invention is not restricted with the Examples in any way. In the Examples, the unit "%" represent % by weight, and the term "x% ethanol" is an aqueous ethanol solution of x% by volume.

### Example 1: Preparation of a pepper flavoring agent A

Grain pepper was preliminary chopped into about 0.5 mm. The pepper (5 g) was added into an Oster blender, and 95% ethanol (100 g) was added thereto. The pepper was ground to be a powder and mixed with ethanol. The mixture was added into a pressure tight vessel (TPR-1 type portable reactor manufactured by TAIATSU TECHNO Corporation; TVS-N2). The mixture was left alone at 40°C under the gauge pressure of 0.18 MPa for 30 minutes in a tightly-sealed condition. Then, solid contents were removed by filtration using a filter paper (manufactured by ADVANTEC; No.1 filter paper) to obtain a pepper flavoring agent A (89 g).

### Example 2: Preparation of pepper flavoring agent B

A pepper flavoring agent B (89 g) was obtained by a similar manner as the Example 1 except that the ground mixture was left alone at 40°C under the gauge pressure of 0.18 MPa for 60 minutes in a tightly-sealed condition after the mixture was added into the pressure tight vessel.

### Example 3: Preparation of pepper flavoring agent C

A pepper flavoring agent C (89 g) was obtained by a similar manner as the Example 1 except that the ground mixture was left alone at 80°C under the gauge pressure of 0.18 MPa for 30 minutes in a tightly-sealed condition after the mixture was added into the pressure tight vessel.

### Example 4: Preparation of pepper flavoring agents D, E and F

Grain pepper was preliminary chopped into about 0.5 mm. For preparing pepper flavoring agents D, E and F, the pepper (5 g) and a solvent (100 g) each were added into an Oster blender. The solvents were 75% ethanol for agent D, 50% ethanol for agent E and pure water for agent F. The pepper was ground to be a powder and mixed with the each solvent. Pepper flavoring agents D (88 g, ethanol concentration: about 75%), E (87 g, ethanol concentration: about 50%) and F (83 g, ethanol concentration: about 0%) were obtained by a similar manner as the Example 1 except for the above condition.

### Example 5: Preparation of pepper flavoring agent G

Chopped pepper (5 g) was added into an Oster blender, and triacetin (100 g) was added thereto. The pepper was ground to be a powder and mixed with triacetin. A pepper flavoring agent G (78 g) was obtained by a similar manner as the Example 1 except that the mixture was subject to centrifuge separation at 10,000 rpm for 5 minutes for removing solid contents.

### Comparative Example 1: Preparation of pepper flavoring agent H

A pepper flavoring agent H (89 g) was obtained by a similar manner as the Example 1 except that the ground mixture was left alone without a tightly-sealed condition under ordinary pressure after the mixture was added into the pressure tight vessel.

### Example 6: Preparation of drinks containing the pepper flavoring agent A to H

The pepper flavoring agents A to H obtained in the Examples 1 to 5 and Comparative Example 1 was added to hot water in the concentration of 0.1%, to obtain drinks containing a flavoring agent.

The drinks containing the flavoring agent were organolepticlly evaluated. Specifically, five evaluators drank the drinks, and evaluated the flavor, i.e. scent and taste, and the titer of the flavor. The term "titer" means the strength of flavor. The evaluation was carried out on the basis of three standards, "almost same flavor as flavoring material", "close flavor to flavoring material" and "different flavor from flavoring material". The titer of Examples was evaluated on the basis of "1: weak" - "3: almost same as Comparative Example" - "5: strong" when Comparative Example was evaluated as "3". The average of the titer values evaluated by the five evaluators was calculated as a titer score. The results are shown in Table 1.

**Table 1 Pepper flavoring agent**

| | Example 1 | Example 2 | Example 3 | Example 4 | | | Example 5 | Comparative Example 1 |
|---|---|---|---|---|---|---|---|---|
| | (A) | (B) | (C) | (D) | (E) | (F) | (G) | (H) |
| Almost same flavor as raw pepper | 5 evaluators | 5 evaluators | 3 evaluators | 4 evaluators | 3 evaluators | 1 evaluator | 4 evaluators | 1 evaluator |
| Close flavor to raw pepper | 0 | 0 | 1 evaluator | 1 evaluator | 2 evaluators | 1 evaluator | 1 evaluator | 2 evaluators |
| Different flavor from raw pepper | 0 | 0 | 1 evaluator | 0 | 0 | 3 evaluators | 0 | 2 evaluators |
| Titer value | 4.4 | 4.8 | 4.8 | 4.2 | 4.0 | 3.4 | 4.6 | 3.0 |

As is clear from Table 1, when the pepper flavoring agent A and the pepper flavoring agent H were compared for evaluating the effect of the extraction under pressure, all of five evaluators appraised the drink containing the pepper flavoring agent A as the same as raw pepper in the point of having flesh flavor, and four evaluators appraised the drink containing the pepper flavoring agent H as different from raw pepper and poor in flesh flavor. The titer value of the pepper flavoring agent A was higher than pepper flavoring agent H. Therefore, extraction under pressure is clearly effective.

When the pepper flavoring agent A and the pepper flavoring agent B were compared for evaluating the effect of the extraction time, all of five evaluators appraised both of the drinks containing the pepper flavoring agent A and the pepper flavoring agent B as the same as raw pepper in the point of having flesh flavor. Since both of the pepper flavoring agent A and the pepper flavoring agent B were highly acclaimed compared with the pepper flavoring agent H, the extraction method of the present invention is clearly effective. In addition, it was apparent that a flavoring component can be sufficiently obtained with the extraction time of about not less than 30 minutes and not more than 60 minutes, since there was not sensible difference between the pepper flavoring agent A and the pepper flavoring agent B.

When the pepper flavoring agent A and the pepper flavoring agent C were compared for evaluating the effect of the extraction temperature, three evaluators appraised the pepper flavoring agent C as the same as raw pepper in the point of having flesh flavor. Since the pepper flavoring agent C was highly acclaimed compared with the pepper flavoring agent H, the extraction method of the present invention is clearly effective. However, unlike in the case of the pepper flavoring agent A, one evaluator appraised the pepper flavoring agent C as different from raw pepper in flavor. It was clearly found that more natural and real flavor, i. e. original flavor of flavoring raw material, can be obtained by the extraction at lower temperature.

When the pepper flavoring agents A, D to F were compared for evaluating the effect of the extraction solvent, many evaluators judged that the higher an ethanol concentration was, the more real the flavor was. Therefore, the extraction using high concentration ethanol was clearly effective. In addition, triacetin which was used as an extraction solvent for the pepper flavoring agent G was clearly and highly effective as similar to ethanol. However, the titer value of the pepper flavoring agent F extracted using low concentration ethanol was superior to the pepper flavoring agent H of Comparative Example 1.

### Example 7: Preparation of ginger flavoring agent A and cibol flavoring agent A

A raw ginger was preliminary chopped into about 1 mm to 2 mm. The raw ginger (50 g) was added into an Oster blender, and 95% ethanol (100 g) was added thereto. The raw ginger was sufficiently pulverized and mixed with ethanol. The mixture was added into a pressure tight vessel (TPR-1 type portable reactor manufactured by TAIATSU TECHNO Corporation; TVS-N2). The mixture was left alone at room temperature (25°C) under the gauge pressure of 0.18 MPa for 60 minutes in a tightly-sealed condition, to obtain a ginger flavoring agent A (143 g) having solid contents and a liquid content without solid-liquid separation. A cibol flavoring agent A (142 g) was similarly obtained using 50 g of raw cibol.

### Comparative Example 2: Preparation of ginger flavoring agent B and cibol flavoring agent B

A ginger flavoring agent B (144 g) was obtained by a similar manner as the Example 7 except that the pressure tight vessel was not tightly sealed without increased pressure after the pulverized mixture was added to the pressure tight vessel. In addition, a cibol flavoring agent B (144 g) was similarly obtained using raw cibol (50 g).

### Example 8: Preparation of drinks containing the ginger flavoring agents A or B or the cibol flavoring agents A or B

The ginger flavoring agents A or B or the cibol flavoring agents A or B obtained in the Example 7 or Comparative Example 2 was added to cold water in the concentration of 1%, to obtain drinks containing flavoring agent. The obtained drinks containing flavoring agent were organolepticlly evaluated as Example 6 concerning pepper flavoring agent. The results are shown in Table 2.

**Table 2 Ginger flavoring agent and Cibol flavoring agent**

| | Example 7 | Comparative Example 2 |
|---|---|---|
| | (A) | (B) |
| Almost same flavor as flavoring material | 5 evaluators | 2 evaluators |
| Close flavor to flavoring material | 0 | 2 evaluators |
| Different flavor from flavoring material | 0 | 1 evaluator |
| Titer value | 4.8 | 3.0 |

As is clear from Table 2, all of five evaluators appraised the drink containing the pepper flavoring agent A or the cibol flavoring agent A of the Example 7 as the same as raw material in the point of having flesh flavor, and three evaluators appraised the drink containing the pepper flavoring agent B or the cibol flavoring agent B of the Comparative Example 2 as different from raw material and poor in flesh flavor. The titer value of the flavoring agent A was higher than the flavoring agent B. Therefore, it is apparent that the extraction method of a flavoring agent according to the present invention is effective even without solid-liquid separation.

### Example 9: Preparation of fruit flavoring agent A

European pear 'La France' was preliminary chopped into about 1 mm to 2 mm. The La France (50 g) was added into an Oster blender, and 95% ethanol (100 g) was added thereto. The La France was sufficiently pulverized and mixed with ethanol. Then, a La France flavoring agent A (89 g) was obtained as the Example 1. In addition, an orange, a lemon and a grapefruit was preliminary chopped into about 1 mm to 3 mm. Using the chopped fruits (50 g), an orange flavoring agent A (89 g), a lemon flavoring agent A (90 g) and a grapefruit flavoring agent A (89 g) were similarly obtained.

### Example 10: Preparation of fruit flavoring agent B

A La France flavoring agent B (87 g) was obtained by a similar manner as the Example 9 except that the mixture was left alone at room temperature (50°C) under the gauge pressure of 0.18 MPa for 60 minutes in a tightly-sealed condition after the pulverized mixture was added to a pressure tight vessel. In addition, an orange, a lemon and a grapefruit was preliminary chopped into about 1 mm to 3 mm. Using the chopped fruits (50 g), an orange flavoring agent B (88 g), a lemon flavoring agent B (88 g) and a grapefruit flavoring agent B (89 g) were similarly obtained.

### Example 11: Preparation of fruit flavoring agent C

La France was preliminary chopped into about 1 mm to 2 mm. The La France (50 g) was added into an Oster blender, and triacetin (100 g) was added thereto. The La France was sufficiently pulverized and mixed with triacetin. The mixture was taken out of a cutter mixer and added into a pressure tight vessel of TPR-1 type portable reactor (manufactured by TAIATSU TECHNO Corporation; TVS-N2). The mixture was left alone at 40 °C under the gauge pressure of 2 MPa for 30 minutes in a tightly-sealed condition. Then, a La France flavoring agent C (75 g) was obtained as a similar manner of the Example 9 except that the mixture was centrifuged at 10,000 rpm for 15 minutes for removing solid contents. In addition, an orange, a lemon and a grapefruit was preliminary chopped into about 1 mm to 3 mm. Using the chopped fruits (50 g), an orange flavoring agent C (80 g), a lemon flavoring agent C (78 g) and a grapefruit flavoring agent C (78 g) were similarly obtained.

### Example 12: Preparation of fruit flavoring agents D and E

La France was preliminary chopped into about 1 mm to 2 mm. The La France (50 g) was added into an Oster blender, and 70% ethanol (100 g) for agent D or 35% ethanol (100 g) for agent E was respectively added thereto. The La France was sufficiently pulverized and mixed with ethanol. A La France flavoring agents D (86 g) of which ethanol concentration was about 50% and E (90 g) of which ethanol concentration was about 25% were obtained. In addition, an orange, a lemon and a grapefruit was preliminary chopped into about 1 mm to 3 mm. Using the chopped fruits (50 g), orange flavoring agents D (90 g) and E (88 g), lemon flavoring agents D (88 g) and E (91 g) and grapefruit flavoring agents D (87 g) and E (87 g) were similarly obtained.

### Comparative Example 3: Preparation of fruit flavoring agent F

A La France flavoring agent F (88 g) was obtained by a similar manner as the Example 9 except that the pressure tight vessel was not tightly sealed without increased pressure after the pulverized mixture was added thereto. In addition, an orange, a lemon and a grapefruit was preliminary chopped into about 1 mm to 3 mm. Using the chopped fruits (50 g), an orange flavoring agents F (90 g), a lemon flavoring agent F (88 g) and a grapefruit flavoring agent F (89 g) were similarly obtained.

### Example 13: Preparation of drinks containing the fruit flavoring agent A to F

The fruit flavoring agents A to F obtained in the Example 9, 10, 11, 12 and Comparative Example 3 were added to cold water in the concentration of 0.1%, to obtain drinks containing flavoring agent. The obtained drinks containing flavoring agent were organolepticlly evaluated as Example 6 concerning pepper flavoring agent. The results are shown in Table 3.

**Table 3 Fruit flavoring agent**

| | Example 9 | Example 10 | Example 11 | Example 12 | | Comparative Example 3 |
|---|---|---|---|---|---|---|
| | (A) | (B) | (C) | (D) | (E) | (F) |
| Almost same flavor as flavoring material | 5 evaluators | 5 evaluators | 3 evaluators | 4 evaluators | 2 evaluators | 1 evaluator |
| Close flavor to flavoring material | 0 | 0 | 2 evaluators | 0 | 2 evaluators | 3 evaluators |
| Different flavor from flavoring material | 0 | 0 | 0 | 1 evaluator | 1 evaluator | 1 evaluator |
| Titer value | 4.4 | 4.6 | 3.8 | 4.0 | 3.6 | 3.0 |

As is clear from Table 3, all of five evaluators appraised the drinks containing the fruit flavoring agent A or B of the Example 9 or 10 as the same as raw material in the point of having flesh flavor, and three evaluators appraised the drink containing the fruit flavoring agent C of the Example 11 as raw material. On the other hand, four evaluators appraised the drink containing the fruit flavoring agent F of the Comparative Example 3 as different from raw material and poor in flesh flavor. The titer value of the flavoring agents A, B and C were higher than the flavoring agent F. Therefore, it is apparent that the extraction method of a flavoring agent according to the present invention is also effective for a fruit.

In addition, the fruit flavoring agents D and E of the Example 12 were appraised as superior to the flavoring agent F. It is clear that the extraction method of the present invention is effective when a solvent is mixed.

### Example 14: Preparation of mushroom flavoring agent A

Cooked matsutake mushroom was preliminary chopped into about 1 mm to 5 mm. The matsutake mushroom (50 g) was added into an Oster blender and 95% ethanol (100 g) was added thereto. The matsutake mushroom was sufficiently pulverized and mixed with ethanol. Then, a matsutake mushroom flavoring agent A (87 g) was obtained by a similar manner as the Example 1. In addition, a dried shiitake mushroom was preliminary chopped into about 1 mm to 5 mm. Using the chopped shiitake mushroom (5 g), a shiitake mushroom flavoring agents A (86 g) was similarly obtained.

### Comparative Example 4: Preparation of mushroom flavoring agent B

A matsutake mushroom flavoring agent B (89 g) was obtained by a similar manner as the Example 14 except that the pressure tight vessel was not tightly sealed without increased pressure after the pulverized mixture was added thereto. In addition, a dried shiitake mushroom was preliminary chopped into about 1 mm to 5 mm. Using the chopped shiitake mushroom (5 g), a shiitake mushroom flavoring agents B (86 g) was similarly obtained.

### Example 15: Preparation of drinks containing the mushroom flavoring agent A or B

The mushroom flavoring agent A or B obtained in the Example 14 or Comparative Example 4 was added to hot water in the concentration of 0.1%, to obtain drinks containing flavoring agent. The obtained drinks containing flavoring agent were organolepticlly evaluated as Example 6 concerning pepper flavoring agent. The results are shown in Tables 4 and 5.

**Table 4 Matsutake mushroom flavoring agent**

| | Example 14 | Comparative Example 4 |
|---|---|---|
| | (A) | (B) |
| Almost same flavor as raw matsutake mushroom | 4 evaluators | 1 evaluator |
| Close flavor to raw matsutake mushroom | 1 evaluator | 1 evaluator |
| Different flavor from raw matsutake mushroom | 0 | 3 evaluators |
| Titer value | 4.2 | 3.0 |

**Table 5 Shiitake mushroom flavoring agent**

| | Example 14 | Comparative Example 4 |
|---|---|---|
| | (A) | (B) |
| Almost same flavor as dried shiitake mushroom | 3 evaluators | 1 evaluator |
| Glose flavor to dried shiitake mushroom | 2 evaluators | 1 evaluator |
| Different flavor from dried shiitake mushroom | 0 | 3 evaluators |
| Titer value | 4.0 | 3.0 |

As is clear from Table 4, four evaluators appraised the drink containing the matsutake mushroom flavoring agent A of the Example 14 as the same as raw material in the point of having flesh flavor, but four evaluators appraised the drink containing the matsutake mushroom flavoring agent B of the Comparative Example 4 as different from raw material and poor in flesh flavor. The titer value of the flavoring agent A was higher than the flavoring agent B. Therefore, it is apparent that the extraction method of a flavoring agent according to the present invention is also effective for a matsutake mushroom.

As is clear from Table 5, three evaluators appraised the drink containing the shiitake mushroom flavoring agent A of the Example 14 as the same as raw material in the point of having flesh flavor, but four evaluators appraised the drink containing the shiitake mushroom flavoring agent B of the Comparative Example 4 as different from raw material and poor in flesh flavor. The titer value of the flavoring agent A was higher than the flavoring agent B. Therefore, it is apparent that the extraction method of a flavoring agent according to the present invention is effective for a dried shiitake mushroom.

From the above results, it was demonstrated that the flavor of a raw material, which is not only raw but also dried, can be directly transferred to a flavoring agent.

### Example 16: Preparation of processed food flavoring agent A

Roast chicken skin was preliminary chopped into about 1 mm to 5 mm. The roast chicken skin (50 g) was added into an Oster blender, and 95% ethanol (100 g) was added thereto. The roast chicken skin was pulverized and mixed with ethanol. Then, a roast chicken flavoring agent A (90 g) was obtained by a similar method of Example 1 except that the extraction temperature was 60°C. In addition, commercially available bacon which was smoked under hot air and without firing was preliminary chopped into about 1 mm to 5 mm. Using the chopped bacon (50 g), a bacon flavoring agent A (90 g) was similarly obtained.

### Example 17: Preparation of processed food flavoring agents B and C

A roast chicken flavoring agent B (88 g) was obtained similarly as the Example 16 except that the mixture was left alone at 60°C under the gauge pressure of 2 MPa for 30 minutes in a tightly-sealed condition after the pulverized mixture was added to a pressure tight vessel. In addition, a roast chicken flavoring agent C (90 g) was obtained similarly except for under the gauge pressure of 8 MPa. Furthermore, commercially available bacon which was smoked under hot air and without firing was preliminary chopped into about 1 mm to 5 mm. Using the chopped bacon (50 g), a bacon flavoring agents B (90 g) and C (85 g) were similarly obtained.

### Comparative Example 5: Preparation of processed food flavoring agent D

A roast chicken flavoring agent D (89 g) was obtained similarly as the Example 16 except that the pressure tight vessel was not tightly sealed without increased pressure after the pulverized mixture was added thereto. In addition, commercially available bacon which was smoked under hot air and without firing was preliminary chopped into about 1 mm to 5 mm. Using the chopped bacon (50 g), a bacon flavoring agents D (90 g) was similarly obtained.

### Example 18: Preparation of drinks containing the processed food flavoring agent A to D

The processed food flavoring agent A to D obtained in the Examples 16 or 17 or Comparative Example 5 was added to hot water in the concentration of 1%, to obtain drinks containing flavoring agent. The obtained drinks containing flavoring agent were organolepticlly evaluated as Example 6 concerning pepper flavoring agent. The results are shown in Table 6.

**Table 6 Processed food flavoring agent**

| | Example 16 | Example 17 | | Comparative Example 5 |
|---|---|---|---|---|
| | (A) | (B) | (C) | (D) |
| Almost same flavor as flavoring material | 4 evaluators | 5 evaluators | 4 evaluators | 1 evaluator |
| Close flavor to flavoring material | 1 evaluator | 0 | 1 evaluator | 2 evaluators |
| Different flavor from favoring material | 0 | 0 | 0 | 2 evaluators |
| Titer value | 4.4 | 4.8 | 4.8 | 3.0 |

As is clear from Table 6, four evaluators appraised the drink containing the processed food flavoring agent A, B or C of the Examples 16 or 17 as the same as raw material in the point of having flesh flavor, but four evaluators appraised the drink containing the processed food flavoring agent D of the Comparative Example 5 as different from raw material and poor in flesh flavor. The titer values of the flavoring agents A, B and C were higher than the flavoring agent D. Therefore, it is apparent that the extraction method of a flavoring agent according to the present invention is also effective for a processed food.

In addition, from the evaluation result of the flavoring agents A, B and C obtained in the Examples 16 and 17, pressure in the present invention method is clearly effective.

### Example 19: Preparation of drink flavoring agent A

Roast coffee beans were preliminary chopped into about 1 mm to 3 mm. The coffee beans (5 g) were added into an Oster blender, and 95% ethanol (100 g) was added thereto. The coffee beans were pulverized and mixed with ethanol. Then, a coffee flavoring agent A (85 g) was obtained by a similar method of Example 1. In addition, dried tea leaves were preliminary chopped into about 1 mm to 3 mm. Using the chopped tea leaves (5 g), a tea flavoring agent A (87 g) was similarly obtained.

### Example 20: Preparation of drink flavoring agent B and C

A coffee flavoring agent B (90 g) was obtained similarly as the Example 19 except that the extraction temperature was adjusted to be 60°C. In addition, a coffee flavoring agent C (87 g) was obtained similarly as the Example 19 except that the extraction temperature was adjusted to be 100 °C. Furthermore, tea leaves were preliminary chopped into about 1 mm. Using the chopped tea leaves (5 g), a tea flavoring agents B (86 g) and C (91 g) were similarly obtained.

### Comparative Example 6: Preparation of drink flavoring agent D

A coffee flavoring agent D (86 g) was obtained similarly as the Example 19 except that the pressure tight vessel was not tightly sealed without increased pressure after the pulverized mixture was added thereto. In addition, dried tea leaves were preliminary chopped into about 1 mm. Using the chopped tea leaves (5 g), a tea flavoring agents D (86 g) was similarly obtained.

### Example 21: Preparation of drinks containing the processed food flavoring agent A to D

The drink flavoring agent A to D obtained in the Examples 19 or 20 or Comparative Example 6 was added to cold water in the concentration of 0.1%, to obtain drinks containing flavoring agent. The obtained drinks containing flavoring agent were organolepticlly evaluated as Example 6 concerning pepper flavoring agent. The results are shown in Table 7.

**Table 7 Drink flavoring agent**

| | Example 19 | Example 20 | | Comparative Example 6 |
|---|---|---|---|---|
| | (A) | (B) | (C) | (D) |
| Almost same flavor as flavoring material | 3 evaluators | 3 evaluators | 2 evaluators | 1 evaluator |
| Close flavor to flavoring material | 2 evaluators | 2 evaluators | 3 evaluators | 3 evaluators |
| Different flavor from flavoring material | 0 | 0 | 0 | 1 evaluator |
| Titer value | 4.0 | 4.6 | 4.6 | 3.0 |

As is clear from Table 7, three evaluators appraised the drink containing the drink flavoring agent A of the Example 19 as the same as raw material in the point of having flesh flavor, but four evaluators appraised the drink containing the processed food flavoring agent D of the Comparative Example 6 as different from raw material and poor in flesh flavor. The titer value of the flavoring agent A was higher than the flavoring agent D. Therefore, it is apparent that the extraction method of a flavoring agent according to the present invention is also effective for a drink flavoring raw material.

In addition, the titer values of the flavoring agents B and C were very high, though the flavoring agents were lesser to an extent than the flavoring agent A. Therefore, the flavoring agents B and C were apparently superior to the flavoring agent D of the Comparative Example 6.

### Example 22: Japanese citron flavoring agent

Japanese citron was preliminary chopped into about 1 mm to 3 mm. The Japanese citron (50 g) was added into an Oster blender, and propylene glycol (100 g) was added thereto. The Japanese citron was pulverized and mixed with propylene glycol. Then, a Japanese citron flavoring agent A (76 g) was obtained by a similar method of Example 1 except that the gauge pressure and the extraction temperature were respectively adjusted to be 0.02 MPa and 4°C.

### Comparative Example 7

A Japanese citron flavoring agent B (78 g) was obtained by a similar manner as the Example 22 except that the pressure tight vessel was not tightly sealed without increased pressure after the pulverized mixture was added thereto.

### Example23: Preparation of drinks containing the Japanese citron flavoring agent A or B

The drink flavoring agent A or B obtained in the Examples 22 or Comparative Example 7 was added to cold water in the concentration of 0.1%, to obtain drinks containing flavoring agent. The obtained drinks containing flavoring agent were organolepticlly evaluated as Example 6 concerning pepper flavoring agent. The results are shown in Table 8.

**Table 8 Japanese citron flavoring agent**

| | Example 22 | Comparative Example 7 |
|---|---|---|
| | (A) | (B) |
| Almost same flavor as raw Japanese citron | 4 evaluators | 2 evaluators |
| Close flavor to raw Japanese citron | 1 evaluator | 1 evaluator |
| Different flavor from raw Japanese citron | 0 | 2 evaluators |
| Titer value | 4.4 | 3.0 |

As is clear from Table 8, four evaluators appraised the drink containing the Japanese citron flavoring agent A of the Example 22 as the same as raw Japanese citron in the point of having flesh flavor, but two evaluators appraised the drink containing the flavoring agent B of the Comparative Example as different from raw Japanese citron and poor in flesh flavor. The titer value of the flavoring agent A was higher than the flavoring agent B. Therefore, it is apparent that the extraction method of a flavoring agent according to the present invention is also effective for Japanese citron.

### Example 24: Herb flavoring agent

Dried lemon myrtle leaves were preliminary chopped into about 1 mm. The dried lemon myrtle leaves (10 g) were added into an Oster blender, and 95% ethanol (100 g) was added thereto. The lemon myrtle leaves were pulverized to be powder and mixed with propylene glycol. Then, a lemon myrtle flavoring agent A (86 g) was obtained by a similar manner of Example 1 except that the gauge pressure was adjusted to be 10 MPa and the extraction was carried out under pressure using ADVANTEC FILTER HOLDER for removing solid contents.

### Example 25

A lemon myrtle flavoring agent B (85 g) was obtained as the same method of Example 24 except that the extraction was carried out under reduced pressure using No. 1 filter paper manufactured by ADVANTEC.

### Comparative Example 8

A lemon myrtle flavoring agent C (86 g) was obtained similarly as the Example 24 except that the pressure tight vessel was not tightly sealed without increased pressure after the pulverized mixture was added thereto.

### Example26: Preparation of drinks containing the lemon myrtle flavoring agent A or B

The lemon myrtle flavoring agent A, B or C obtained in the Examples 24 or 25 or Comparative Example 8 was added to cold water in the concentration of 0.1%, to obtain drinks containing flavoring agent. The obtained drinks containing flavoring agent were organolepticlly evaluated as Example 6 concerning pepper flavoring agent. The results are shown in Table 9

**Table 9 Lemon myrtle flavoring agent**

| | Example 24 | Example 25 | Comparative Example 8 |
|---|---|---|---|
| | (A) | (B) | (C) |
| Almost same flavor as lemon myrtle | 3 evaluators | 3 evaluators | 0 |
| Close flavor to lemon myrtle | 2 evaluators | 2 valuators | 2 evaluators |
| Different flavor from lemon myrtle | 0 | 0 | 3 evaluators |
| Titer value | 5.0 | 4.2 | 3.0 |

As is clear from Table 9, three evaluators appraised the drink containing the flavoring agent A or B of the Example 24 or 25 as the same as raw material in the point of having flesh flavor, but two evaluators appraised the drink containing the flavoring agent C of the Comparative Example 8 as different from flavoring raw material and poor in flesh flavor. The titer value of the flavoring agents A and B were higher than the flavoring agent C. Therefore, it is apparent that the extraction method of a flavoring agent according to the present invention is also effective for lemon myrtle. In addition, it was found that extraction under pressure is more useful in the extraction method according to the present invention.

### Example 27

Candied Japanese plum was preliminary chopped into about 10 mm to 20 mm. The Japanese plum (50 g) was added into an Oster blender, and 95% ethanol (100 g) was added thereto. The Japanese plum was pulverized and mixed with ethanol. Then, a Japanese plum flavoring agent A (82 g) was obtained by a similar manner as Example 1.

Similarly, grain pepper was preliminary chopped into about 0.5 mm. The grain pepper (10 g) was added into an Oster blender, and propylene glycol (100 g) was added thereto. The grain pepper was pulverized and mixed with ethanol. Then, a pepper flavoring agent A (71 g) was obtained by a similar manner as Example 1 except that the mixture was subject to centrifuge separation at 10,000 rpm for 15 minutes for removing solid contents.

### Comparative Example 9

A Japanese plum flavoring agent B (71 g) and a pepper flavoring agent B (66 g) were obtained by a similar manner as Example 26 except that canola oil was used instead of 95% ethanol or propylene glycol and the mixture was subject to centrifuge separation at 10,000 rpm for 15 minutes for removing solid contents and an aqueous layer.

### Example 28

### (1) Preparation of Japanese plum measurement sample

Pure water (60 ml) and canola oil (60 ml) was added to the Japanese plum flavoring agent A (60 ml) of the Example 26. After the mixture was strongly stirred for 5 minutes, the aqueous layer was obtained using a separating funnel. Similarly, pure water (60 ml) and 95% ethanol (60 ml) was added to the Japanese plum flavoring agent B (60 ml) of the Comparative Example 9, and the aqueous layer was obtained. In addition, the aqueous layer was obtained as Japanese plum control sample (C) by mixing pure water (60 ml), canola oil (60 ml) and 95% ethanol (60 ml).

### (2) Preparation of pepper measurement sample

Pure water (60 ml) and canola oil (60 ml) was added to the pepper flavoring agent A (60 ml) of the Example 26. After the mixture was strongly stirred for 5 minutes, the aqueous layer was obtained using a separating funnel. Similarly, pure water (60 ml) and propylene glycol (60 ml) was added to the pepper flavoring agent B (60 ml) of the Comparative Example 9, and the aqueous layer was obtained. In addition, the aqueous layer was obtained as pepper control sample (C) by mixing pure water (60 ml), canola oil (60 ml) and 95% ethanol (60 ml).

### (3) Organoleptic evaluation

Five evaluators smelled the scent of the flavoring agents of Example 26 and Comparative Example 9 and the control sample, in order to evaluate the scent. Then, each of the flavoring agents and the control sample (50 µl) was added dropwise on the tongue in order to evaluate the taste. After the evaluation of each sample, the mouth was cleaned out using water. The result of the Japanese plum flavoring agent is shown in Table 10, and the result of the pepper flavoring agent is shown in Table 11.

**Table 10**

| | Example 27 | Comparative Example 9 | Control Sample |
|---|---|---|---|
| | (A) | (B) | (C) |
| Taste | Sweet taste and acid taste derived from Japanese plum in addition to control sample | Approximately-same taste as control sample | Only the taste derived from ethanol |
| Scent | Japanese plum scent h addition to control sample | Japanese plum scent in addition to control sample | Only the scent derived from ethanol and oil |

**Table 11**

| | Example 27 | Comparative Example 9 | Control Sample |
|---|---|---|---|
| | (A) | (B) | (C) |
| Taste | Spicy taste derived from pepper in addition to control sample | Approximately-sam e taste as control sample | Only the taste derived from propylene glycol |
| Scent | Pepper scent h addition to control sample | Pepper scent in addition to control sample | Only the scent derived from oil |

### (4) Measurement using electronic taste sensing system

Each sample (80 ml) was added into a beaker included in an electronic taste sensing system (α ASTREE manufactured by Alpha M.O.S.) and the beaker was set into the equipment to carrying out the measurement of each sample. The measurement was repeated five times, and the sixth to tenth data was recorded. The measurement of pure water was carried out between the measurements of the samples for washing so that the immixture of the samples was avoided. In the system, seven kinds of sensors which respectively show response spectrum depending on the film composition thereof are combined. The taste component dissolved in a sample specifically acts on the sensitive membrane; as a result, the electric potential difference between the sensor and the reference electrode is changed. The change is detected as a signal, and a fingerprint can be made from the signal. The resulting fingerprint is shown as Figure 1.

As the result of Figure 1, with respect to both of Japanese plum and pepper, it was found that the canola oil extract samples (B) of Comparative Example 9 was close to the control sample (C) in terms of the taste sense such as sweet taste, acid taste and spicy taste. On the other hand, the data position of the ethanol extract sample from Japanese plum (A) and propylene glycol extract sample from pepper (A) obtained in the Example 26 was far away from the position of the control sample. When the result was combined with the organoleptic evaluation result, it was experimentally demonstrated that the taste which was derived from the raw material but which could not be extracted using canola oil could be effectively obtained by using a solvent having the specific SP value.

## Claims

1. A method for producing a flavoring agent,
comprising the steps of mixing a flavor material with a solvent and extracting a flavor component contained in the flavor material under pressure;
wherein a solubility parameter of the solvent is not less than 8.0 and not more than 25.0.

2. The method for producing a flavoring agent according to claim 1, wherein the solvent is at least one solvent selected from the group consisting of water, an alcohol solvent, a ketone solvent and an ester solvent.

3. The method for producing a flavoring agent according to claim 2, wherein the solvent is a mixed solvent containing the alcohol solvent or the ketone solvent in addition to water.

4. The method for producing a flavoring agent according to claim 2, wherein the solvent is at least one solvent selected from the group consisting of ethanol, propylene glycol and triacetin.

5. The method for producing a flavoring agent according to any one of claims 1 to 4, wherein the flavor component is extracted under pressure at not less than 0°C and not more than 100°C.

6. The method for producing a flavoring agent according to any one of claims 1 to 5, wherein the flavor material is at least one selected from the group consisting of a seasoning spice, a flavor vegetable, a fruit, a mushroom, a nut, a seaweed, a tea and a meat.

7. The method for producing a flavoring agent according to any one of claims 1 to 6, further comprising the step of filtering the extract under pressure after the extraction step.

8. A flavoring agent obtained by the production method according to any one of claims 1 to 7.

9. A food or a drink comprising the flavoring agent according to claim 8.

10. A flavor product comprising the flavoring agent according to claim 8.
